# EUROPEAN PATENT SPECIFICATION

(11) **EP 3 911 266 B1**
(45) Date of publication and mention of the grant of the patent: **07.06.2023**
(21) Application number: 20717261.0
(22) Date of filing: 25.02.2020
(51) Int. Cl.: A61C 8/00, A61C 13/00, A61C 13/20

(54) **BENDABLE CASTABLE ABUTMENT FOR THE MANUFACTURE OF A DENTAL PROSTHESIS FRAMEWORK**
BIEGBARES, GIESSBARES ABUTMENT FÜR DIE HERSTELLUNG EINES ZAHNPROTHESENGERÜSTS
BUTÉE POUVANT ÊTRE MOULÉE PLIABLE POUR LA FABRICATION D'UN CADRE DE PROTHÈSE DENTAIRE

(30) Priority: 26.02.2019 ES 201930167
(43) Date of publication of application: 24.11.2021
(73) Proprietor: Astradentium Health Technologies, S.L., 08003 Barcelona (ES)
(72) Inventor: LLORO BOADA, Ivan, 08003 Barcelona (ES); LLORO BOADA, Victor Alejandro, 08003 Barcelona (ES); MUÑOZ PINO, Juan, 08003 Barcelona (ES)
(74) Representative: Gallego Jiménez, José Fernando
(86) International application number: PCT/IB2020/051596
(87) International publication number: WO 2020/174390

(56) References cited:
- EP-A1- 3 206 623
- WO-A1-2004/105632
- WO-A1-2014/200404
- ES-A1- 2 524 946
- US-A- 5 527 182

## Description

### Technical field

The present invention relates to a bendable castable abutment for the manufacture of a framework.

### State of the art

In the state of the art, the use of castable abutments for the modelling of frameworks by means of the lost wax method is known, consisting, first, of adding castable material (typically wax) for coating on said castable abutment, and/or by removing parts of the castable abutment. Second, once the framework model is obtained, said model is wrapped in refractory moulding material and introduced into a preheating furnace at a temperature of around 900°C to eliminate the castable material. Third, the molten metal is poured into the resulting cavity, thus obtaining the framework on which a coating, typically made of ceramic, is placed, thus obtaining a dental prosthesis.

The castable abutment, and consequently also the obtained framework, has a hollow interior that defines a conduit accessible from the outside through an access opening through which a fixing screw can be introduced and screwed which anchors the castable abutment, or the framework, to a dental implant.

The position and orientation of the castable abutment will therefore determine the aesthetics and shape of the metal framework and of the dental prosthesis, as well as the position of the access opening through which the fixing screw is introduced, which preferably should be in a non-visible area of the dental prosthesis once installed in the mouth.

Therefore, and also due to the uncertain position of the initial dental implant, bendable castable abutments are also known which have a fixing base joined to a tubular wall through a tubular joint which enables the orientation thereof to be modified with respect to the orientation of the dental implant.

A common solution is that of a bendable abutment by means of a ball joint, such as that described in documents US4793808A, US4832601A, US5302125A. However, the ball joint solution requires placing a spherical surface above the abutment support base of the abutment, the centre of rotation of the abutment being the centre of said sphere, which will be a few millimetres above the fixing base. Therefore, a portion adjacent to the fixing base cannot correct the orientation thereof, and only the most distal part thereof can correct the orientation thereof.

By means of document US2007099151 A1, a hollow abutment provided with cuts in the walls thereof which enable the bending thereof is also known; however, said cuts only enable bending in a single direction, in addition to implying a weakening of said abutment and a possible entry of castable material inside the castable abutment which could make it difficult to insert or remove the fixing screw.

WO2014/200404; US5527182 and ES2524946 disclose each a bendable castable abutment for the manufacture of a framework of a dental prosthesis attached to a dental implant.

### Brief description of the invention

The present invention relates to a bendable castable abutment for the manufacture of a framework, preferably made of metal, of a dental prosthesis attached to a dental implant.

It is understood that a dental prosthesis, typically composed of a ceramic material, is supported on a framework that is usually composed of a metal material, which has a hollow interior through which a screw can be introduced and screwed so that it enables said framework to be fixed to a dental implant.

The dental implant is an element, usually threaded, surgically implanted in the mouth of a patient receiving said dental prosthesis.

The proposed castable abutment is an abutment intended to be fixed to a duplicate of the patient's denture, said duplicate including at least one dental implant analogue (representing the dental implant with an exact replica of the interface between implant and castable) in an identical position as the dental implant implanted in the patient.

This enables an expert operator, who in this case will be a dental technician, to add castable material, for example wax, on the castable abutment and/or remove parts of the castable abutment until obtaining a model of the framework required to support a certain coating (typically ceramic) adapted to a specific dental space of the patient.

The framework model obtained from the castable abutment is coated with a refractory material and introduced into a preheating furnace at about 900 °C calcining the castable abutment and the castable material. Subsequently, molten metal is poured inside it, filling the cavity left by the castable abutment and the castable material forming the metal framework that reproduces the shape of the wax-modelled framework model.

Preferably, the metal framework will reproduce the shape of the desired dental prosthesis, but in a somewhat smaller size, between one and two millimetres smaller.

The position and orientation of the initial castable abutment determines the position and size of the metal framework finally obtained, and also the position of the opening of the metal framework through which the fixing screw is placed. Said position and orientation of the castable abutment (traditionally straight) is in turn determined by the position and orientation of the dental implant.

In order to correct the orientation of the castable abutment with respect to the dental implant, it is proposed that said castable abutment includes, in a manner known per se:
- a fixing base provided with a first complementary coupling configuration with part of a dental implant or of a dental implant analogue intended for coupling the fixing base to the dental implant or to the dental implant analogue, and provided with a through hole intended for placing a fixing screw of the castable abutment to the dental implant or to the dental implant analogue;
- a hollow tubular wall made of castable material and connected to the fixing base, said tubular wall comprising a hollow tubular joint, adjacent to the fixing base, made up of a succession of pairs of frustoconical rings joined in succession forming an accordion section, each pair of rings being made up of a first frustoconical ring and a second frustoconical ring in reverse orientation.
- The through hole of the fixing base is intended for placing a fixing screw of the castable abutment on the dental implant or on the dental implant analogue; said through hole will preferably be surrounded by an inner annular seating surface arranged in a hollow interior of the castable abutment, aimed to support the head of the fixing screw.

Said first coupling configuration of the fixing base will preferably be provided to be complementary to the head of the dental implant or to the head of the dental implant analogue, i.e., the geometry thereof will allow a narrow and stable support.

There are many geometries that can allow said narrow and stable support, although geometries that enable the fixing base to be partially inserted into the head of the dental implant or of the dental implant analogue, or vice versa, will be preferred, for example being part of the external annular seating surface with a frustoconical, cylindrical, truncated pyramidal or prismatic shape, able to be inserted in said head, or with said external annular seating surface defining a hollow with one of said geometries to which a portion of the head of the dental implant or of the complementary dental implant analogue provided with said geometry can be inserted.

Geometries that prevent relative rotation between both elements will also be preferred, avoiding cylindrical or frustoconical geometries, or including anchors that prevent rotation.

Despite the foregoing, the use of other geometries, including non-regular geometries for this purpose, is also contemplated.

The tubular wall and the tubular joint are hollow and enable the fixing screw to pass therethrough in order to be inserted through the through hole of the fixing base, so that a head of said fixing screw remains supported on the inner annular seating surface. When fixing the fixing screw to a dental implant or to a dental implant analogue, said fixing screw will clamp the fixing base against the dental implant or against the dental implant analogue, so that the first coupling configuration of the fixing base will remain in contact and pressed against the head of the dental implant or the dental implant analogue, achieving firm fixation of the castable abutment.

The tubular joint enables the tubular wall, or most of it, to be oriented with respect to the fixing base, enabling the direction of the castable abutment to be corrected with respect to the direction of the dental implant, thus ensuring a correct alignment of the dental prosthesis with the rest of the denture. This feature also enables the skilled operator to adjust the position of the opening of the castable abutment through which the fixing screw is introduced, and which determines the position of the metal framework, enabling said opening to be placed in a position not visible from the outside of the mouth.

The use of a succession of pairs of joined frustoconical rings forming an accordion section gives flexibility to the hollow tubular joint, enabling the inclination and orientation thereof to be modified at will.

The invention is defined in the claims.

The present invention further proposes, in a novel way, that:
- the first and second frustoconical rings be made of a material and thickness selected to be elastically deformable, capable of recovering a stable position in the absence of external forces; and
- the first frustoconical ring and the second frustoconical ring be asymmetrical, so that the elastic force exerted by the stable positions of the first frustoconical rings is different from that exerted by the stable positions of the second frustoconical rings, making the first frustoconical ring in a stable position hold the second frustoconical ring in a non-stable position wherein the pair of frustoconical rings is collapsed only in one part, keeping the tubular joint (12) in a stable inclined position.

Therefore, the invention proposes the use, for the manufacture of the tubular joint, of a material selected so that, by using it with a preestablished thickness, said material is elastically deformable, i.e., it enables the shape thereof to be modified by applying an external force but it recovers the initial geometry thereof when said external force ceases.

It also proposes that the first frustoconical ring and the second frustoconical ring of each pair of frustoconical rings that make up the accordion section of the tubular joint are different from each other, for example, the first frustoconical ring being longer than the second frustoconical ring.

The use of an elastically deformable material would cause any deformation applied to the tubular joint due to an external force to be an unstable deformation, and therefore the castable abutment would recover the initial position thereof when said external force disappears.

However, the aforementioned asymmetry between the first and second frustoconical rings causes the elastic force of the first frustoconical rings to be greater than the elastic force of the second frustoconical rings, and therefore, in the absence of other external forces, the elastic force of the frustoconical rings can hold the second frustoconical rings in a different position than the initial one.

Thus, after a deformation applied by an external force, this enables the tubular joint to remain in the new position when said external force disappears, maintaining the castable abutment in the inclined position desired by the technician who is producing the dental prosthesis.

In an inclined position, parts of some of the second frustoconical rings will remain inserted in the first frustoconical rings, collapsing only one side of the accordion section which defines the tubular joint causing the inclination thereof to one side. Each first frustoconical ring will act as a clamp or sash that will hold the part of the second frustoconical rings inserted therein, preventing it from coming out due to the elastic force of the material, retaining the shape thereof.

If the first and second frustoconical rings were symmetrical, the partial collapse of the accordion section would not cause parts of the second frustoconical rings to enter into the first frustoconical rings, but it would simply cause the frustoconical rings to flatten in the form of overlapping discs. When the external force is removed, the elastic properties of the material would cause the castable abutment to return to the initial position thereof, typically the upright position, all the frustoconical rings recovering the original shape thereof, making it difficult for the technician who would have to maintain the castable abutment in the desired inclined position by other means.

Thus, each pair of frustoconical rings can be collapsed asymmetrically, that is to say, collapsing only on one side, and/or extended only on one side, determining a wedge that causes a rotation of the axis of the tubular wall. The accumulation of the turns produced by each pair of frustoconical rings enables considerable turns of the axis of the tubular wall to be obtained.

According to a proposed embodiment, at the joining between the first and second frustoconical rings, the thickness of the material is less than the thickness of the material in the first frustoconical ring and in the second frustoconical ring, weakening said joints that serve as hinges.

It is also contemplated that each first and second frustoconical ring is tensioned, subjected to prestress in an annular direction. This can be achieved, for example, by a manufacturing technique that deforms an initial tube to generate said first and second frustoconical rings. The deformation introduced will generate tensions within the material corresponding to said prestressing.

The proposed solution enables the inclination of the tubular wall with respect to the fixing base of the castable abutment to begin at a position very close to the latter, and not a few millimetres above it as with other known systems. This represents a great improvement given the little existing space and the uncertain initial position of the dental implant also in height.

According to an embodiment of the invention, the tubular wall, the tubular joint and the fixing base of the castable abutment are a single one-piece integral body made of castable material.

This will enable the framework to be manufactured by means of a casting technique in which the entire castable abutment will be calcined by molten metal that will replace it within a mould, obtaining a monolithic framework.

It is also contemplated that the fixing base is a castable piece independent of and joined to the rest of the castable abutment, which is also made of castable material, enabling a monolithic framework to be obtained when molten metal is poured.

Alternatively, it is proposed that the fixing base be made of non-castable material, such as metal, with said non-castable fixing base being joined to the rest of the castable abutment. In such a case, the manufacturing of the framework will require an overcasting technique wherein the molten metal material will calcine only the castable parts of the castable abutment and will be joined, when solidified, to the fixing base made of metal.

The joining between the fixing base and the rest of the castable abutment can be carried out by means of a second coupling configuration provided in the fixing base and complementary to one end of the tubular wall. Said second coupling configuration will be intended for fixing the tubular wall to said fixing base, for example, by means of a pressure adjustment, of an annular projection that can be inserted in an annular groove, or another configuration that enables the tubular wall to be held joined to the fixing base. Furthermore, said coupling configuration can be both a removable fixing in one embodiment of the invention and allow a rotational movement between the tubular wall and the fixing base in another different embodiment of the invention.

Said fixing base made of metal can be made, in a non-limiting manner, of a selected metal which is typically titanium, gold, palladium, chromium-cobalt alloy or chromium-nickel alloy.

The parts made of castable material are proposed to be made of plastic, such as, for example, polypropylene.

In the event that the bottom wall and the rest of the fixing base are independent elements, the through hole will pass through both elements.

According to an additional embodiment, it is proposed that the thickness of the tubular wall portion provided with accordion pleated rings be equal to or less than 1 mm or preferably equal to or less than 0.5 mm. With these thicknesses it is possible to obtain the aforementioned elastically deformable properties in some of the castable materials commonly used for these applications.

Preferably, the thickness of the tubular wall portion where the frustoconical rings are defined will be equal to or greater than 0.05 mm. A smaller thickness may be insufficient to lend elastic force to the material commonly used for this application, thus producing plastic deformations.

Typically, the castable material used will be a plastic material, preferably polypropylene.

It is also proposed that the inner annular seating surface and the start of a first accordion pleated ring be coplanar or on parallel planes separated by less than 2 mm. This enables a very low centre of rotation of the tubular joint to be ensured, lower than that provided by other systems.

The tubular wall portion provided with accordion pleated rings will preferably occupy at least one fifth of the length of the tubular wall.

The possibility that the entire length of the tubular wall is provided with accordion pleated rings is also contemplated.

According to a preferred embodiment, the minimum distance that separates the outer and inner annular surfaces will be equal to or less than 2 mm.

It will be understood that references to geometric positions, such as parallel, perpendicular, tangent, etc. admit deviations of up to 15° with respect to the theoretical position defined by said nomenclature.

It will also be understood that any range of values offered might not be optimal in the extreme values thereof and might require adaptations of the invention for said extreme values to be applicable, said adaptations being within the reach of a person skilled in the art.

Other features of the invention will appear in the following detailed description of exemplary embodiments.

### Brief description of the figures

The foregoing and other advantages and features will be more fully understood from the following detailed description of an exemplary embodiment with reference to the attached drawings, which should be taken by way of illustration and not limitation, wherein:
Fig. 1 shows a side elevational and plan view of the proposed castable abutment, the straight castable abutment being unbent;
Fig. 2 shows a side elevational and plan view of the proposed castable abutment, the castable abutment being bent;
Fig. 3 shows an exploded section view of the castable abutment, the dental implant or dental implant analogue and the fixation screw according to an embodiment in which the entire fixing base is part of the same castable block with the rest of the castable abutment;
Fig. 4 shows the same view as Fig. 3 but of an embodiment in which the fixing base is independent of the rest of the castable abutment, both elements being joined by means of a second pressure coupling configuration.

### Detailed description of exemplary embodiments

The attached figures show exemplary embodiments, by way of illustration and not limitation, of the present invention.

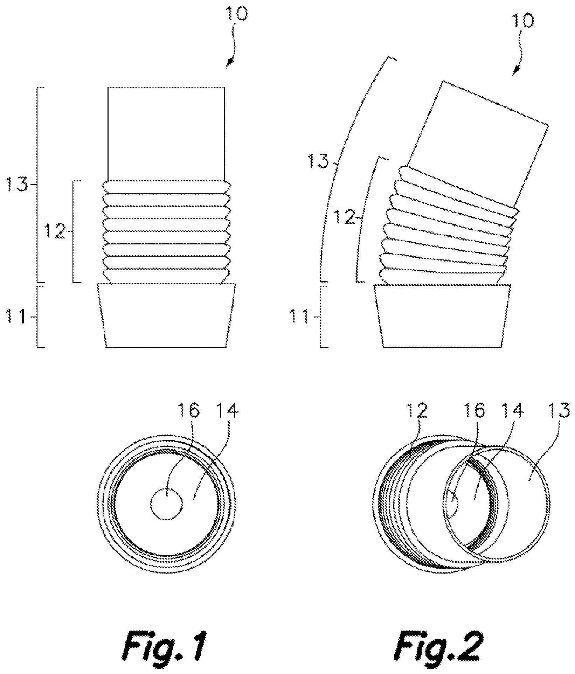

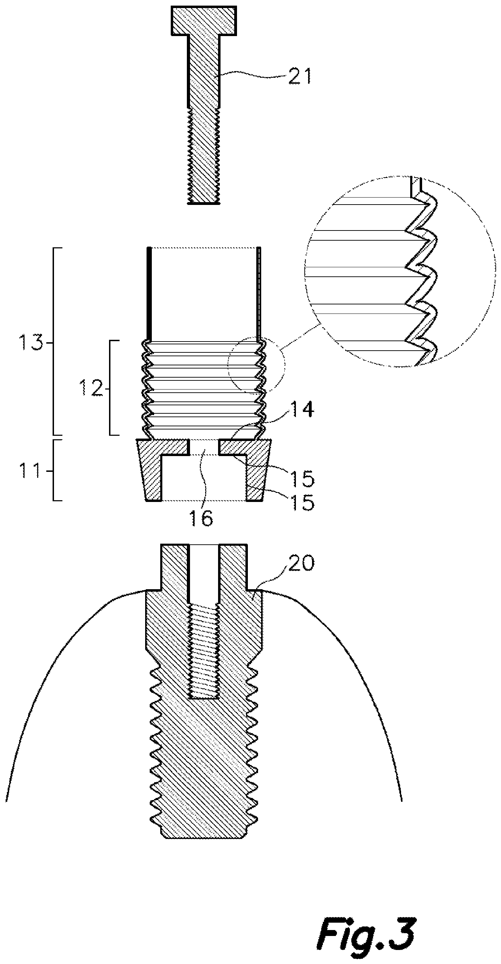

Figures 1, 2 and 3 correspond to a first embodiment of the proposed castable abutment 10.

According to this embodiment, the castable abutment 10 consists of a fixing base 11 and a tubular wall 13 connected through a tubular joint 12, the entire assembly constituting a one-piece integral body made of castable material.

The tubular wall 13 has a hollow interior with an end adjacent to the fixing base 11 closed by a bottom wall that includes in the centre thereof a through hole 16 that crosses the bottom wall.

The size of said through hole 16 will be smaller than the size of the hollow interior of the tubular wall 13, so it will entail a narrowing and define an inner annular seat 14 around it, on a face of the bottom wall accessible from the hollow interior of the tubular wall 13.

The fixing base 11 will also include a first coupling configuration 15, accessible from the outside of the tubular wall 13, said first coupling configuration 15 being arranged around the through hole 16.

In the example shown in Fig. 1, 2 and 3, the fixing base 11 has a flat inner annular seating surface 14 in the form of a disk around the through hole 16, and a first coupling configuration 15 in the form of a cylindrical bore or in the form of a prismatic bore, for example, with a square, hexagonal or octagonal base.

In this example, the head of the dental implant 20 or of the dental implant analogue 20 will have a cylindrical or prismatic shape that can be inserted in the bore defined by the first coupling configuration 15.

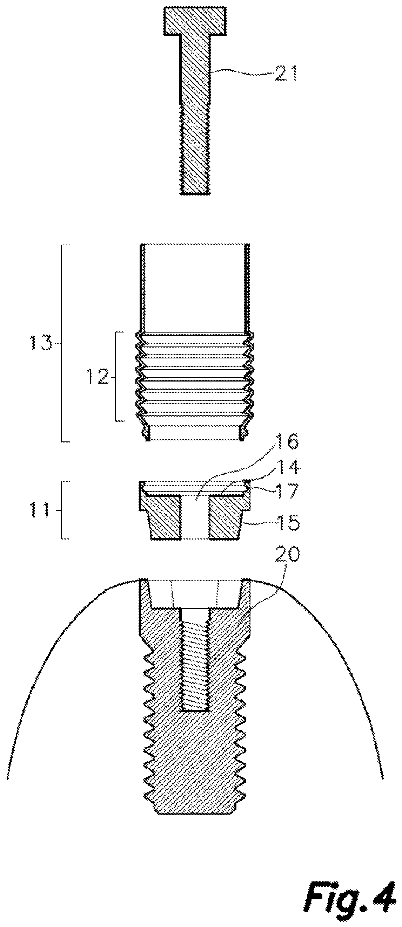

On the contrary, in the example shown in Fig. 4, the fixing base 11 has a first cylindrical or prismatic protruding coupling configuration, for example with a square, hexagonal or octagonal base, while the head of the dental implant 20 or of the dental implant analogue 20 has a cylindrical bore or a prismatic bore, for example, with a square, hexagonal or octagonal base.

A fixing screw 21 inserted through the hollow interior of the tubular wall 13 may be inserted through the through hole 16 and fixed to, for example, a dental implant analogue 20, so that a head of said fixing screw will remain inside the hollow interior of the tubular wall 13, supported on the inner annular seating surface 14, clamping the first coupling configuration 15 of the fixing base 11 against the head of the dental implant analogue 20. In this way, a firm fixation of the castable abutment to the dental implant analogue 20 is achieved.

In the example shown in Fig. 1, 2 and 3, the entire tubular wall assembly 13, with the respective tubular joint 12, as well as the fixing base 11, constitutes a one-piece solid made of castable material, preferably plastic such as polypropylene.

Alternatively, it is proposed that only the tubular body 13 and the tubular joint 12 constitute a one-piece solid made of castable material, the fixing base 11 being an independent element and therefore can be made of the same or another material. Therefore, the fixing base 11 may be made of castable material, or of non-castable material. In any case, the tubular body 13 will be joined to the fixing base 11. To achieve said joining, including a second coupling configuration 17 to the fixing base 11 is proposed, said second coupling configuration 17 being complementary to the lower end of the tubular body 13, achieving tight joining between both bodies.

In the example shown in Fig. 4, the fixing base 11 includes, as a second coupling configuration 17, an annular groove which is complementary to an annular projection defined in the base of the tubular body 13, enabling said annular projection to be inserted into the annular groove under pressure, achieving retention of the tubular body 13 joined to the fixing base 11.

It is proposed, for example, that the fixing base 11 be made of a metal so that when the framework is manufactured replacing the castable material with molten metal, that part will not be calcined and will be integrated into the rest of the framework, thus ensuring greater dimensional accuracy in the first coupling configuration 15.

In any case, all embodiments propose that at least the portion of the tubular wall 13 adjacent to the fixing base 11 includes a tubular joint 12 which enables the orientation of the tubular wall 13 to be modified with respect to the fixing base 11.

Said tubular joint 12 consists of a succession of pairs of frustoconical rings joined at the bases thereof forming an accordion section capable of being collapsed or extended asymmetrically, enabling the tubular wall 13 to be oriented with respect to the fixing base 11 and maintaining said orientation.

Each pair of rings consists of a first frustoconical ring and a second frustoconical ring, both with identical diameter at the base thereof and at the cusp thereof, but having a different height, therefore being non-symmetrical. Each first frustoconical ring is joined at the base thereof to the base of a second frustoconical ring, defining in said joining an annular hinge. The pairs of rings follow each other along the portion of the tubular body 13 that defines the tubular joint 12, the truncated cusp of each first frustoconical ring remaining joined to the truncated cusp of a second frustoconical ring by means of another annular hinge. The result of said succession of frustoconical rings is a succession of first and second alternate frustoconical rings that define an accordion section.

It is proposed that the tubular joint 12 be made of a defined material and thickness so that the frustoconical rings are elastically deformable, i.e., they can be elastically deformed under an external force, but that they recover the original shape thereof when said external force ceases.

In this example, it is proposed that the material be plastic, for example polypropylene, and that the walls of the first and second truncated frustoconical rings have a thickness between 1 mm and 0.05 mm, the preferred thickness being between 0.5 mm and 0.1 mm.

Optionally, it is contemplated that not only a part, but the entire length of the tubular wall 13 includes the aforementioned accordion frustoconical rings, so that the tubular joint 12 covers the entire length of the tubular wall 13.

## Claims

1. A bendable castable abutment for the manufacture of a dental prosthesis framework, said castable abutment (10) including:
• a fixing base (11) provided with a first complementary coupling configuration with part of a dental implant (20) or of a dental implant analogue (20) intended for coupling the fixing base (11) to the dental implant (20) or to the dental implant analogue (20), and provided with a through hole (16) intended for placing a fixing screw (21) of the castable abutment (10) to the dental implant (20) or to the dental implant analogue (20);
• a hollow tubular wall (13) made of castable material and connected to the fixing base (11), said tubular wall (13) comprising a hollow tubular joint (12), made of an elastically deformable material, adjacent to the fixing base (11), made up of a succession of pairs of frustoconical rings joined in succession forming an accordion section, each pair of rings being made up of a first frustoconical ring with a base and a truncated cusp and a second frustoconical ring, each first frustoconical ring being joined at the base thereof to the base of a second frustoconical ring, defining in said joining an annular hinge, and being joined at the truncated cusp thereof to the truncated cusp of another second frustoconical ring, defining in said joining another annular hinge; said base of the first frustoconical rings and of the second frustoconical rings being of the same diameter and said truncated cusp of the first frustoconical rings and of the second frustoconical rings being of the same diameter;
**characterised in that**
• the height of the first frustoconical rings is different from the height of the second frustoconical rings; and
• each first and second frustoconical rings is generated by deforming the tubular wall (13) to generate tensions within the material.

2. The castable abutment according to claim 1, wherein the constituent material of the tubular joint (12) has a thickness, at the joinings between the first and second frustoconical rings, lower than the thickness of the constituent material of the tubular joint (12) in the first frustoconical ring and in the second frustoconical ring.

3. The castable abutment according to claim 1 or 2, wherein the tubular wall (13) and the fixing base (11) form a monolithic integral assembly made of a single piece of castable material.

4. The castable abutment according to claim 1 or 2, wherein the fixing base (11) includes a second coupling configuration (17) complementary to one end of the tubular wall (13) intended for joining the tubular wall (13) to said fixing base (11).

5. The castable abutment according to claim 4, wherein the second coupling configuration (17) includes an annular projection that can be inserted in an annular groove that provides an adjustment by means of pressure between the tubular wall (13) and the fixing base (11) allowing a rotational movement and/or a removable fixing between the tubular wall (13) and the fixing base (11).

6. The castable abutment according to claim 1, 2, 4 or 5, wherein the fixing base (11) is made of a non-castable or metal material and is joined to the tubular wall (13) made of castable material.

7. The castable abutment according to claim 6, wherein the metal material is selected from titanium, gold, palladium, chromium-cobalt alloy or chromium-nickel alloy.

8. The castable abutment according to any one of the preceding claims, wherein the thickness of the tubular wall portion (13) where the frustoconical rings are defined is equal to or less than 1 mm, or equal to or less than 0.5 mm.

9. The castable abutment according to any one of the preceding claims, wherein the thickness of the tubular wall portion (13) where the frustoconical rings are defined is equal to or greater than 0.05 mm.

10. The castable abutment according to any one of the preceding claims, wherein the tubular joint (12) is located less than 3 mm from the fixing base (11).

11. The castable abutment according to any one of the preceding claims, wherein the portion of the tubular wall having first and second frustoconical rings occupies at least one fifth of the length of the tubular wall (13).

12. The castable abutment according to any one of the preceding claims, wherein the entire length of the tubular wall (13) is configured as a tubular joint (12).

13. The castable abutment according to any of the preceding claims, wherein the castable material is a plastic or polypropylene material.

## Patentansprüche

1. Biegbares, gießbares Abutment zur Herstellung eines Zahnprothesengerüsts, wobei das gießbare Abutment (10) Folgendes einschließt:
• eine Befestigungsbasis (11), die mit einer ersten komplementären Kopplungskonfiguration mit einem Teil eines Zahnimplantats (20) oder eines Zahnimplantatanalogs (20) versehen ist, die vorgesehen ist, um die Befestigungsbasis (11) an das Zahnimplantat (20) oder das Zahnimplantatanalog (20) zu koppeln, und mit einem Durchgangsloch (16) versehen ist, das zum Platzieren einer Befestigungsschraube (21) des gießbaren Abutments (10) an dem Zahnimplantat (20) oder an dem Zahnimplantatanalog (20) vorgesehen ist;
• eine hohle röhrenförmige Wand (13), die aus gießbarem Material hergestellt ist und mit der Befestigungsbasis (11) verbunden ist, wobei die röhrenförmige Wand (13) eine hohle röhrenförmige Verbindung (12) aus einem elastisch verformbaren Material angrenzend an die Befestigungsbasis (11) umfasst, die aus einer Folge von Paaren kegelstumpfförmiger Ringe, die hintereinander verbunden sind und einen Akkordeonabschnitt bilden, besteht, wobei jedes Paar Ringe aus einem ersten kegelstumpfförmigen Ring mit einer Basis und einer Stumpfspitze und einem zweiten kegelstumpfförmigen Ring besteht, wobei jeder erste kegelstumpfförmige Ring an seiner Basis mit der Basis eines zweiten kegelstumpfförmigen Rings verbunden ist, wodurch beim Verbinden ein ringförmiges Scharnier definiert wird, und an seiner Stumpfspitze mit der Stumpfspitze eines anderen zweiten kegelstumpfförmigen Rings verbunden ist, wodurch beim Verbinden ein weiteres ringförmiges Scharnier definiert wird; wobei die Basis der ersten kegelstumpfförmigen Ringe und die der zweiten kegelstumpfförmigen Ringe denselben Durchmesser haben und die Stumpfspitze der ersten kegelstumpfförmigen Ringe und die der zweiten kegelstumpfförmigen Ringe denselben Durchmesser haben;
**dadurch gekennzeichnet, dass**
• sich die Höhe der ersten kegelstumpfförmigen Ringe von der Höhe der zweiten kegelstumpfförmigen Ringe unterscheidet; und
• jeder der ersten und zweiten kegelstumpfförmigen Ringe durch Verformen der röhrenförmigen Wand (13) erzeugt wird, um Spannungen innerhalb des Materials zu erzeugen.

2. Gießbares Abutment nach Anspruch 1, wobei das Einsatzmaterial der röhrenförmigen Verbindung (12) an den Verbindungen zwischen dem ersten und dem zweiten kegelstumpfförmigen Ring eine Dicke aufweist, die geringer ist als die Dicke des Einsatzmaterials der röhrenförmigen Verbindung (12) in dem ersten kegelstumpfförmigen Ring und in dem zweiten kegelstumpfförmigen Ring.

3. Gießbares Abutment nach Anspruch 1 oder 2, wobei die röhrenförmige Wand (13) und die Befestigungsbasis (11) eine monolithische einstückige Anordnung bilden, die aus einem einzigen Stück gießbaren Materials hergestellt ist.

4. Gießbares Abutment nach Anspruch 1 oder 2, wobei die Befestigungsbasis (11) eine zweite Kopplungskonfiguration (17) einschließt, die zu einem Ende der röhrenförmigen Wand (13), das zum Verbinden der röhrenförmigen Wand (13) mit der Befestigungsbasis (11) vorgesehen ist, komplementär ist.

5. Gießbares Abutment nach Anspruch 4, wobei die zweite Kopplungskonfiguration (17) einen ringförmigen Vorsprung einschließt, der in eine ringförmige Nut eingeführt werden kann, die eine Justierung mittels Druck zwischen der röhrenförmigen Wand (13) und der Befestigungsbasis (11) bereitstellt, was eine Drehbewegung und/oder eine lösbare Befestigung zwischen der röhrenförmigen Wand (13) und der Befestigungsbasis (11) erlaubt.

6. Gießbares Abutment nach Anspruch 1, 2, 4 oder 5, wobei die Befestigungsbasis (11) aus einem nicht gießbaren oder metallischen Material hergestellt ist und mit der röhrenförmigen Wand (13) aus gießbarem Material verbunden ist.

7. Gießbares Abutment nach Anspruch 6, wobei das metallische Material aus Titan, Gold, Palladium, einer Chrom-Kobalt-Legierung oder einer Chrom-Nickel-Legierung ausgewählt ist.

8. Gießbares Abutment nach einem der vorstehenden Ansprüche, wobei die Dicke des röhrenförmigen Wandabschnitts (13) dort, wo die kegelstumpfförmigen Ringe definiert sind, gleich oder kleiner als 1 mm oder gleich oder kleiner als 0,5 mm ist.

9. Gießbares Abutment nach einem der vorstehenden Ansprüche, wobei die Dicke des röhrenförmigen Wandabschnitts (13) dort, wo die kegelstumpfförmigen Ringe definiert sind, gleich oder größer als 0,05 mm ist.

10. Gießbares Abutment nach einem der vorstehenden Ansprüche, wobei die röhrenförmige Verbindung (12) weniger als 3 mm von der Befestigungsbasis (11) entfernt angeordnet ist.

11. Gießbares Abutment nach einem der vorstehenden Ansprüche, wobei der Abschnitt der röhrenförmigen Wand, der die ersten und zweiten kegelstumpfförmigen Ringe aufweist, mindestens ein Fünftel der Länge der röhrenförmigen Wand (13) einnimmt.

12. Gießbares Abutment nach einem der vorstehenden Ansprüche, wobei die gesamte Länge der röhrenförmigen Wand (13) als eine röhrenförmige Verbindung (12) konfiguriert ist.

13. Gießbares Abutment nach einem der vorstehenden Ansprüche, wobei das gießbare Material ein Kunststoff- oder Polypropylenmaterial ist.

## Revendications

1. Pilier coulable flexible pour la fabrication d'une ossature de prothèse dentaire, ledit pilier coulable (10) comportant :
• une base de fixation (11) pourvue d'une première structure de couplage complémentaire avec une partie d'un implant dentaire (20) ou d'un analogue d'implant dentaire (20) destinée à coupler la base de fixation (11) à l'implant dentaire (20) ou à l'analogue d'implant dentaire (20) et pourvue d'un trou traversant (16) destiné à placer une vis de fixation (21) du pilier coulable (10) à l'implant dentaire (20) ou à l'analogue d'implant dentaire (20) ;
• une paroi tubulaire creuse (13) constituée de matériau coulable et reliée à la base de fixation (11), ladite paroi tubulaire (13) comprenant une articulation tubulaire creuse (12), constituée d'un matériau élastiquement déformable, adjacente à la base de fixation (11), constituée d'une succession de paires d'anneaux tronconiques joints successivement formant une section en accordéon, chaque paire d'anneaux étant constituée d'un premier anneau tronconique présentant une base et un sommet tronqué et d'un second anneau tronconique, chaque premier anneau tronconique étant joint au niveau de sa base à la base d'un second anneau tronconique, établissant dans ladite jonction une charnière annulaire, et étant joint au niveau de son sommet tronqué au sommet tronqué d'un autre second anneau tronconique, établissant dans ladite jonction une autre charnière annulaire ; ladite base des premiers anneaux tronconiques et celle des seconds anneaux tronconiques étant de même diamètre et ledit sommet tronqué des premiers anneaux tronconiques et celui des seconds anneaux tronconiques étant de même diamètre ;
**caractérisé en ce que**
• la hauteur des premiers anneaux tronconiques est différente de la hauteur des seconds anneaux tronconiques ; et
• chacun des premiers et seconds anneaux tronconiques est produit par déformation de la paroi tubulaire (13) pour produire des tensions au sein du matériau.

2. Pilier coulable selon la revendication 1, dans lequel le matériau constitutif de l'articulation tubulaire (12) a une épaisseur, au niveau des jonctions entre les premiers et seconds anneaux tronconiques, inférieure à l'épaisseur du matériau constitutif de l'articulation tubulaire (12) dans le premier anneau tronconique et dans le second anneau tronconique.

3. Pilier coulable selon la revendication 1 ou 2, dans lequel la paroi tubulaire (13) et la base de fixation (11) forment un ensemble d'un seul tenant monolithique constitué d'une seule pièce de matériau coulable.

4. Pilier coulable selon la revendication 1 ou 2, dans lequel la base de fixation (11) comporte une seconde structure de couplage (17) complémentaire à une extrémité de la paroi tubulaire (13) destinée à joindre la paroi tubulaire (13) à ladite base de fixation (11).

5. Pilier coulable selon la revendication 4, dans lequel la seconde structure de couplage (17) comporte une saillie annulaire qui peut être insérée dans une rainure annulaire qui fournit un ajustement au moyen de pression entre la paroi tubulaire (13) et la base de fixation (11) permettant un mouvement de rotation et/ou une fixation amovible entre la paroi tubulaire (13) et la base de fixation (11).

6. Pilier coulable selon la revendication 1, 2, 4 ou 5, dans lequel la base de fixation (11) est constituée d'un matériau non coulable ou métallique et est jointe à la paroi tubulaire (13) constituée de matériau coulable.

7. Pilier coulable selon la revendication 6, dans lequel le matériau métallique est choisi parmi le titane, l'or, le palladium, un alliage de chrome-cobalt ou un alliage de chrome-nickel.

8. Pilier coulable selon l'une quelconque des revendications précédentes, dans lequel l'épaisseur de la partie de paroi tubulaire (13) où sont établis les anneaux tronconiques est inférieure ou égale à 1 mm ou inférieure ou égale à 0,5 mm.

9. Pilier coulable selon l'une quelconque des revendications précédentes, dans lequel l'épaisseur de la partie de paroi tubulaire (13) où sont établis les anneaux tronconiques est supérieure ou égale à 0,05 mm.

10. Pilier coulable selon l'une quelconque des revendications précédentes, dans lequel l'articulation tubulaire (12) est située à moins de 3 mm de la base de fixation (11).

11. Pilier coulable selon l'une quelconque des revendications précédentes, dans lequel la partie de la paroi tubulaire ayant des premiers et seconds anneaux tronconiques occupe au moins un cinquième de la longueur de la paroi tubulaire (13).

12. Pilier coulable selon l'une quelconque des revendications précédentes, dans lequel toute la longueur de la paroi tubulaire (13) a une structure sous forme d'une articulation tubulaire (12).

13. Pilier coulable selon l'une quelconque des revendications précédentes, dans lequel le matériau coulable est un matériau plastique ou en polypropylène.
